(19) Europäisches Patentamt
European Patent Office
Office européen des brevets

(11) EP 2 177 353 B1

(12) **EUROPEAN PATENT SPECIFICATION**

(45) Date of publication and mention of the grant of the patent:
**22.10.2014 Bulletin 2014/43**

(21) Application number: **08826906.3**

(22) Date of filing: **07.08.2008**

(51) Int Cl.:
***B32B 25/08*** (2006.01) ***B32B 1/08*** (2006.01)
***B32B 25/00*** (2006.01) ***B32B 27/32*** (2006.01)
***C08F 8/00*** (2006.01) ***C08F 259/08*** (2006.01)

(86) International application number:
**PCT/JP2008/064225**

(87) International publication number:
**WO 2009/020181 (12.02.2009 Gazette 2009/07)**

(54) **MULTILAYER BODY COMPOSED OF FLUORORESIN LAYER AND ELASTOMER LAYER**

MEHRSCHICHTIGER KÖRPER AUS FLUORHARZSCHICHT UND ELASTOMERSCHICHT

CORPS MULTICOUCHE COMPOSE D'UNE COUCHE DE FLUORORESINE ET D'UNE COUCHE ELASTOMERE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.08.2007 JP 2007206897**

(43) Date of publication of application:
**21.04.2010 Bulletin 2010/16**

(73) Proprietor: **Daikin Industries, Ltd.**
**Osaka 530-8323 (JP)**

(72) Inventors:
- **ICHISAKA, Toshiki**
**Settsu-shi**
**Osaka 566-8585 (JP)**
- **DOI, Michiko**
**Settsu-shi**
**Osaka 566-8585 (JP)**
- **MASUDA, Haruhisa**
**Settsu-shi**
**Osaka**
**5668585 (JP)**
- **OHTANI, Katsuhide**
**Settsu-shi**
**Osaka 566-8585 (JP)**
- **YANAGIGUCHI, Tomihiko**
**Settsu-shi**
**Osaka 566-8585 (JP)**
- **ONO, Tsuyoshi**
**Settsu-shi**
**Osaka 566-8585 (JP)**
- **KINO, Tomohiro**
**Settsu-shi**
**Osaka 566-8585 (JP)**
- **YABU, Tadahiro**
**Settsu-shi**
**Osaka 566-8585 (JP)**

(74) Representative: **HOFFMANN EITLE**
**Patent- und Rechtsanwälte**
**Arabellastrasse 4**
**81925 München (DE)**

(56) References cited:
**WO-A1-2006/045636** **JP-A- 2005 022 403**
**JP-A- 2005 299 629** **US-A1- 2002 128 412**
**US-A1- 2002 134 451** **US-A1- 2005 208 248**

- **DATABASE WPI Week 200513 Thomson Scientific, London, GB; AN 2005-115957 XP002590949 -& JP 2005 022403 A (DAIKIN KOGYO KK) 27 January 2005 (2005-01-27)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a laminated article comprising a fluorine-containing resin layer formed using a fluorine-containing resin having a modified terminal and an elastomer layer.

BACKGROUND ART

So far, laws and regulations relating to prevention of fuel evaporation have been established due to increased interest in environment, and especially in automobile industry, in the United States, there is a marked tendency toward inhibition of fuel evaporation and demands for materials being excellent in fuel barrier property are increasing. Now, thermoplastic resins such as polyphenylene sulfide resin, ethylene vinyl alcohol resin and liquid crystal polyester resin are used as a material being excellent in fuel barrier property. These materials have high fuel barrier property, but on the other hand, are lacking in flexibility and it is difficult to use them for applications requiring flexibility. On the contrary, rubber materials have high flexibility, but generally are inferior in fuel barrier property. When rubber materials are used on automobile parts such as fuel hose, there is much evaporation of fuel and improvement in this point is demanded. In order to solve these problems, recently there have been proposed fuel hoses having a laminated structure comprising a resin layer having high fuel barrier property and an elastomer layer having high flexibility.

Examples of materials being excellent in fuel barrier property are fluorine-containing resins. However, fluorine-containing resins are inherently low in adhesion and it is difficult to allow a fluorine-containing resin to adhere directly to other material (substrate), and when adhering is tried by thermo-bonding, adhesive strength is insufficient, and even if a certain extent of adhesive force is obtained, such adhesive force easily varies depending on kind of a substrate. Thus, in many cases, reliability on adhesion is insufficient.

For allowing a fluorine-containing resin to adhere to other material, mainly the following methods are studied:

1. a method of physically roughening a surface of a substrate by sandblasting treatment or the like.
2. a method of subjecting a fluorine-containing resin to surface treatment such as sodium etching, plasma treatment or photochemical treatment.
3. a method of carrying out adhesion using an adhesive.

However, in the above-mentioned methods 1 and 2, a treating step is required and the step is complicated, and therefore, productivity is not good. Also, kind and shape of a substrate are limited. In any case, adhesive strength is insufficient, and problems with appearance of an obtained laminated article (coloration and flaw) easily occur.

With respect to the use of an adhesive of the method 3, various investigations have been made. General hydrocarbon adhesives are insufficient in adhesion, and yet heat resistance thereof is insufficient. Under conditions for adhesion of fluorine-containing polymer where generally molding and processing at high temperature are necessary, such adhesives cannot withstand such high temperature conditions and are decomposed, thereby causing peeling and coloration. A laminated article prepared using such an adhesive is also lacking in reliability since an adhesive layer is insufficient in heat resistance, chemical resistance and water resistance and adhesive strength cannot be maintained due to temperature change and environmental change.

On the other hand, adhesion with an adhesive or adhesive composition comprising a fluorine-containing resin having functional group is studied. For example, there are reports of using, as an adhesive, a fluorine-containing resin prepared by graft-polymerizing a hydrocarbon type monomer represented by maleic anhydride or vinyltrimethoxysilane having carboxyl group, carboxylic acid anhydride residue, epoxy group or hydrolyzable silyl group with a fluorine-containing resin (for example, JP7-18035A, JP7-25952A, JP7-25954A, JP7-173230A, JP7-173446A, JP7-173447A), and reports of curing a curable composition comprising a fluorine-containing copolymer prepared by copolymerizing a hydrocarbon type monomer such as hydroxyalkyl vinyl ether having functional group with tetrafluoroethylene and chlorotrifluoroethylene and an isocyanate curing agent, and using it as an adhesive for vinyl chloride and ethylene/tetrafluoroethylene polymer (hereinafter also referred to as ETFE) subjected to corona discharge treatment (for example, JP7-228848A). Such adhesives and adhesive compositions comprising a fluorine-containing polymer prepared by graft-polymerizing or copolymerizing a hydrocarbon monomer having functional group are insufficient in heat resistance, and when processed at high temperature with a fluorine-containing resin or used at high temperature, cause decomposition and foaming, thereby lowering adhesive strength and causing peeling and coloration. Also, in the case of the adhesive composition described in JP7-228848A, it is necessary to carry out corona discharge treatment on a fluorine-containing resin.

In addition, there is another report of using a fluorine-containing polymer having functional group prepared by copolymerizing a perfluorovinylether compound containing carboxylic acid or its derivative with a fluorine-containing

monomer as an adhesive or adhesive composition. In U.S. Patent No. 4,916,020, there is described a laminated article using a fluorine-containing resin having functional group prepared by copolymerizing perfluorovinylether having carboxylic acid group or its derivative with tetrafluoroethylene, etc. This laminated article is one prepared by laminating the above-mentioned fluorine-containing polymer having carboxylic acid group or the like on a metal or other substrate via an adhesive resin such as an epoxy resin or urethane resin, and adhesion of the polymer is not made directly on a metal, glass or other resin. In this laminated article, there is a problem with heat resistance, chemical resistance and solvent resistance of an epoxy resin or urethane rein. While adhesion is possible by the use of an epoxy resin or urethane resin, a method of adhesion directly to a metal, glass or other resin is not described.

Also, in Japanese Patent No. 2987391, technique of lamination of a synthetic resin layer with an elastomer layer is reported, but it is necessary to blend a specific kind of elastomer in the elastomer layer.

DISCLOSURE OF INVENTION

It is an object of the present invention to provide a laminated article having improved adhesion of a fluorine-containing resin layer to an elastomer layer.

The present invention relates to a laminated article comprising:

(i) a fluorine-containing resin layer (a) which

- is formed using a fluorine-containing resin having a carbonyl group, an olefin group or an amino group at an end of a polymer trunk chain or an end of a polymer side chain, and
- comprises at least one polyfunctional compound (c) having in its molecule two or more functional groups having the same or different structure selected from hydroxyl and amino; and

(ii) an elastomer layer (b) formed using an elastomer composition.

It is preferable that the fluorine-containing resin for the fluorine-containing resin layer (a) is a copolymer comprising tetrafluoroethylene and hexafluoropropylene, a copolymer comprising ethylene and tetrafluoroethylene, or a copolymer comprising chlorotrifluoroethylene and tetrafluoroethylene.

It is preferable that the elastomer composition for the elastomer layer (b) comprises an acrylonitrile-butadiene rubber or a hydrogenated rubber thereof, a blended rubber of acrylonitrile-butadiene rubber and polyvinyl chloride, a fluorine-containing rubber, an epichlorohydrin rubber, an ethylene/propylene rubber, a chlorosulfonated polyethylene rubber or an acrylic rubber.

It is preferable that the elastomer composition for the elastomer layer (b) comprises at least one compound selected from the group consisting of an onium salt, an amine compound and an epoxy resin.

The present invention also relates to a molded article formed using the above-mentioned laminated article. In a preferred embodiment this molded article is a fuel tube.

BEST MODE FOR CARRYING OUT THE INVENTION

The laminated article of the present invention is characterized by comprising (i) the fluorine-containing resin layer (a) formed using a fluorine-containing resin and comprising the at least one polyfunctional compound (c) and (ii) the elastomer layer (b) formed using an elastomer composition.

The fluorine-containing resin layer (a) has a carbonyl group, an olefin group or an amino group at an end of a polymer trunk chain or an end of a polymer side chain in order to improve adhesion to the elastomer layer (b).

The carbonyl group represents a functional group having -C(=O)-. Examples thereof are a group represented by the formula (1):

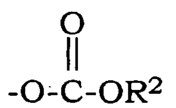

(1)

wherein $R^2$ is an alkyl group having 1 to 20 carbon atoms or an alkyl group having 2 to 20 carbon atoms and containing ether linkage-formable oxygen atom, a haloformyl group (-C(=O)$X^1$, where $X^1$ is a halogen atom), a formyl group (-C(=O)H), a group represented by the formula (2):

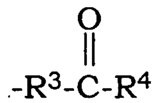 (2)

wherein $R^3$ is a divalent organic group having 1 to 20 carbon atoms, $R^4$ is a monovalent organic group having 1 to 20 carbon atoms, a group represented by the formula:

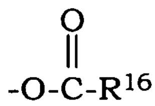

wherein $R^{16}$ is an alkyl group having 1 to 20 carbon atoms or an alkyl group having 2 to 20 carbon atoms and containing ether linkage-formable oxygen atom, a carboxyl group (-C(=O)OH), an alkoxycarbonyl group (-C(=O)$OR^5$, where $R^5$ is a monovalent organic group having 1 to 20 carbon atoms), an amide group (-C(=O)$NR^6R^7$, where $R^6$ and $R^7$ may be the same or different and each is a hydrogen atom or a monovalent organic group having 1 to 20 carbon atoms),

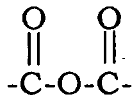 ,

an isocyanate group (-N=C=O) and the like. Examples of $R^2$ in the above-mentioned formula (1) are methyl group, ethyl group, propyl group, isopropyl group, butyl group and the like. Examples of $R^3$ in the above-mentioned formula (2) are a methylene group, $-CF_2-$ group, $-C_6H_4-$ group and the like, and examples of $R^4$ are methyl group, ethyl group, propyl group, isopropyl group, butyl group and the like. Examples of $R^5$ are methyl group, ethyl group, propyl group, isopropyl group, butyl group and the like. Examples of $R^6$ and $R^7$ are a hydrogen atom, methyl group, ethyl group, propyl group, isopropyl group, butyl group, phenyl group and the like.

Among these carbonyl groups, from the viewpoint of easy introduction into the fluorine-containing resin and reactivity with other material, a carboxyl group, a haloformyl group, an alkoxycarbonyl group, and the group represented by the formula:

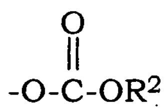 (1)

wherein $R^2$ is an alkyl group having 1 to 20 carbon atoms or an alkyl group having 2 to 20 carbon atoms and containing ether linkage-formable oxygen atom, are preferred, and specifically -COOH, $-OC(=O)OCH_2CH_2CH_3$, -COF and $-OC(=O)OCH(CH_3)_2$ are more preferred.

An olefin group is a functional group having carbon-carbon double bond. Examples thereof are those of the formula (3):

$$-CR^8=CR^9R^{10} \qquad (3)$$

where $R^8$, $R^9$ and $R^{10}$ may be the same or different, and each is a hydrogen atom, fluorine atom or a monovalent organic group having 1 to 20 carbon atoms. Examples of the formula (3) are $-CF=CF_2$, $-CH=CF_2$, -CF=CHF, $-CF=CH_2$, $-CH=CH_2$ and the like.

An amino group is a monovalent functional group obtained by removing hydrogen from ammonia, primary amine or secondary amine. Examples thereof are those of the formula (4):

$$-NR^{11}R^{12} \qquad (4)$$

where $R^{11}$ and $R^{12}$ may be the same or different, and each is a hydrogen atom or a monovalent organic group having 1 to 20 carbon atoms. Examples of the formula (4) are $-NH_2$, $-NH(CH_3)$, $-N(CH_3)_2$, $-NH(CH_2CH_3)$, $-N(C_2H_5)2$, $-NH(C_6H_5)$

and the like.

The number of end groups of the fluorine-containing resin can be measured by the methods described in JP37-3127B and WO 99/45044. For example, when carrying out infrared absorption spectrum analysis of a film sheet of a fluorine-containing resin with an infrared spectrophotometer and measuring the number of functional groups from an absorption band of frequency being specific to the functional group, the number of -COF ends can be calculated from an absorption band of 1,884 $cm^{-1}$, the number of -COOH ends can be calculated from absorption bands of 1,813 $cm^{-1}$ and 1,775 $cm^{-1}$, the number of $-COOCH_3$ ends can be calculated from an absorption band of 1,795 $cm^{-1}$, the number of $-CONH_2$ ends can be calculated from an absorption band of 3,438 $cm^{-1}$, the number of $-CH_2OH$ ends can be calculated from an absorption band of 3,648 $cm^{-1}$, and the number of $-CF=CF_2$ ends can be calculated from an absorption band of 1,790 $cm^{-1}$.

A method of introducing the above-mentioned functional group to the fluorine-containing resin is not limited particularly, and there are, for example, a method of copolymerizing a monomer having the above-mentioned functional group when polymerizing the fluorine-containing resin, a method of carrying out polymerization using a polymerization initiator having the above-mentioned functional group or a functional group being convertible to the above-mentioned functional group, a method of introducing the above-mentioned functional group to the fluorine-containing resin by high polymer reaction, a method of thermal decomposition of a polymer trunk chain in the presence of oxygen, and a method of converting an end of a fluorine-containing resin by using equipment being capable of applying a strong shearing force such as a biaxial extruder.

The number of the above-mentioned functional groups of the fluorine-containing resin is preferably 20 to 5,000, more preferably 30 to 4,000, further preferably 40 to 3,000 per 1,000,000 carbon atoms constituting the fluorine-containing resin. When the number of functional groups is less than 20, adhesive strength of the fluorine-containing resin layer (a) to the elastomer layer (b) tends to be lowered, and when the number of functional groups exceeds 5,000, foaming tends to be generated in the molded article.

The fluorine-containing resin having the above-mentioned functional groups which is used in the present invention may comprise only molecules having the above-mentioned functional groups at one end or both ends of the trunk chain or in the side chain of one polymer, or may be a mixture of molecules having the above-mentioned functional groups at one end or both ends of the trunk chain or in the side chain of the polymer and molecules having no functional groups mentioned above.

The fluorine-containing resin for the fluorine-containing resin layer (a) is not limited particularly, and preferably comprises at least one fluorine-containing ethylenic polymer. It is preferable that the fluorine-containing ethylenic polymer has a structural unit derived from at least one fluorine-containing ethylenic monomer. Examples of the fluorine-containing ethylenic monomer are one or more perfluoroolefins such as tetrafluoroethylene (hereinafter also referred to as TFE) and perfluoro ethylenically unsaturated compounds represented by the formula (5):

$$CF_2=CF-R_f^1 \qquad (5)$$

wherein $R_f^1$ represents $-CF_3$ or $-OR_f^2$, where $R_f^2$ represents a perfluoroalkyl group having 1 to 5 carbon atoms; and fluoroolefins such as chlorotrifluoroethylene (hereinafter also referred to as CTFE), trifluoroethylene, hexafluoroisobutene, vinylidene fluoride (hereinafter also referred to as VdF), vinyl fluoride and compounds represented by the formula (6):

$$CH_2=CX^2(CF_2)_nX^3 \qquad (6)$$

wherein $X^2$ represents hydrogen atom or fluorine atom, $X^3$ represents hydrogen atom, fluorine atom or chlorine atom, n represents an integer of 1 to 10.

The fluorine-containing ethylenic polymer may have a structural unit derived from a monomer being copolymerizable with the above-mentioned fluorine-containing ethylenic monomer, and examples of such a monomer are non-fluorine-containing ethylenic monomers other than the above-mentioned fluoroolefins and perfluoroolefins. Examples of non-fluorine-containing ethylenic monomers are ethylene, propylene and alkyl vinyl ethers. Here, alkyl vinyl ethers are alkyl vinyl ethers having an alkyl group having 1 to 5 carbon atoms.

Of those, from the viewpoint that the obtained fluorine-containing resin composition is excellent in heat resistance, chemical resistance and oil resistance, and its molding processability becomes easy, the fluorine-containing ethylenic polymer is preferably any one of:

(1) an ethylene-TFE copolymer (hereinafter also referred to as ETFE) comprising TFE and ethylene,

(2) a TFE-perfluoro(alkyl vinyl ether) copolymer (PFA) comprising TFE and at least one perfluoro ethylenically unsaturated compound represented by the formula (5):

$CF_2$=CF-$R_f^1$ (5)

wherein $R_f^1$ represents -$CF_3$ or -O$R_f^2$ and $R_f^2$ represents a perfluoroalkyl group having 1 to 5 carbon atoms or a TFE-hexafluoropropylene (hereinafter also referred to as HFP) copolymer (FEP),
(3) an ethylene-TFE-HFP copolymer comprising TFE, ethylene and a perfluoro ethylenically unsaturated compound represented by the formula (5):

$CF_2$=CF-$R_f^1$ (5)

wherein $R_f^1$ is -$CF_3$ or -O$R_f^2$ and $R_f^2$ is a perfluoroalkyl group having 1 to 5 carbon atoms, or a copolymer of ethylene, TFE and perfluoro ethylenically unsaturated compound,
(4) polyvinylidene fluoride (PVDF)
(5) CTFE-TFE-perfluoro ethylenically unsaturated compound copolymer comprising CTFE, TFE and the perfluoro ethylenically unsaturated compound represented by the formula (5):

$CF_2$=CF-$R_f^1$ (5)

wherein $R_f^1$ is -$CF_3$ or -O$R_f^2$ and $R_f^2$ is a perfluoroalkyl group having 1 to 5 carbon atoms, and the fluorine-containing ethylenic polymers represented by (1), (2) and (5) are preferred.

Next, preferred fluorine-containing ethylenic polymers represented by (1), (2) and (5) are explained.

(1) ETFE

ETFE is preferred from the viewpoint that mechanical properties and fuel barrier property in addition to the above described functions and effects are exhibited. A molar ratio of a TFE unit to an ethylene unit is preferably 20:80 to 90:10, more preferably 38:62 to 85:15, especially preferably 37:63 to 80:20. Also, the third component may be contained and kind of the third component is not limited as long as it is copolymerizable with TFE and ethylene. As the third components, monomers represented by the following formulas: $CH_2$=C$X^3R_f^3$, $CF_2$=CF$R_f^3$, $CF_2$=CFO$R_f^3$ and $CH_2$=C($R_f^3$)$_2$ wherein $X^3$ represents a hydrogen atom or a fluorine atom, and $R_f^3$ represents a fluoroalkyl group which may have ether-linkage formable oxygen atom, are usually used, and of those, a fluorine-containing vinyl monomer represented by $CH_2$=C$X^3R_f^3$ is more preferred and a monomer in which $R_f^3$ has 1 to 8 carbon atoms is especially preferred.

Specific examples of the fluorine-containing vinyl monomer represented by the above formula are 1,1-dihydroperfluoropropene-1, 1,1-dihydroperfluorobutene-1, 1,1,5-trihydroperfluoropentene-1, 1,1,7-trihydroperfluoroheptene-1, 1,1,2-trihydroperfluorohexene-1, 1,1,2-trihydroperfluorooctene-1, 2,2,3,3,4,4,5,5-octafluoropentyl vinyl ether, perfluoro(methyl vinyl ether), perfluoro(propyl vinyl ether), hexafluoropropene, perfluorobutene-1, 3,3,3-trifluoro-2-(trifluoromethyl)propene-1, and 2,3,3,4,4,5,5-heptafluoro-1-pentene ($CH_2$=CF$CF_2CF_2CF_2$H).

A content of the third component is preferably 0.1 to 10 % by mole, more preferably 0.1 to 5 % by mole, especially preferably 0.2 to 4 % by mole based on the fluorine-containing ethylenic polymer.

(2) PFA or FEP

PFA or FEP is preferred since heat resistance is especially excellent in the above described functions and effects, and also fuel barrier property is exhibited in addition to the above described functions and effects. PFA or FEP is not limited particularly, and preferred is a copolymer comprising 70 to 99 % by mole of a TFE unit and 1 to 30 % by mole of a perfluoro ethylenically unsaturated compound unit represented by the formula (5) and more preferred is a copolymer comprising 80 to 97 % by mole of a TFE unit and 3 to 20 % by mole of a perfluoro ethylenically unsaturated compound unit represented by the formula (5). When the amount of TFE unit is less than 70 % by mole, mechanical properties tend to be lowered, and when the amount exceeds 99 % by mole, there is a tendency that a melting point becomes too high and moldability is lowered. Also, the fluorine-containing ethylenic polymer comprising TFE and the perfluoro ethylenically unsaturated compound represented by the formula (5) may contain the third component, and kind of the third component is not limited as long as the third component is copolymerizable with TFE and the perfluoro ethylenically unsaturated compound represented by the formula (5).

(5) CTFE-TFE copolymer

In the case of a CTFE-TFE copolymer, a molar ratio of the CTFE unit to the TFE unit is preferably CTFE:TFE=2:98 to 98:2, more preferably CTFE:TFE=5:95 to 90:10. When the amount of CTFE unit is less than 2 % by mole, there is a

tendency that permeability of chemicals is lowered and melt-processing becomes difficult, and when the amount of CTFE unit exceeds 98 % by mole, in some cases, heat resistance and chemical resistance at molding are lowered. Also, it is preferable to copolymerize a perfluoro ethylenically unsaturated compound. It is preferable that the amount of the perfluoro ethylenically unsaturated compound unit is 0.1 to 10 % by mole based on the total amount of CTFE unit and TFE unit and the total amount of CTFE unit and TFE unit is 90 to 99.9 % by mole. When the amount of perfluoro ethylenically unsaturated compound unit is less than 0.1 % by mole, moldability, resistance to environmental stress cracking and stress crack resistance are liable to be inferior, and when the amount exceeds 10 % by mole, low permeability of chemicals, heat resistance, mechanical properties and productivity tend to be inferior.

The melting point of the fluorine-containing ethylenic polymer is preferably 150° to 340°C, more preferably 150° to 330°C, further preferably 170° to 320°C. When the melting point of the fluorine-containing ethylenic polymer is lower than 150°C, heat resistance of the obtained fluorine-containing resin composition tends to be lowered, and when the melting point exceeds 340°C, there is a tendency that the above-mentioned functional group is subject to heat deterioration in a molten state of the fluorine-containing resin and therefore, adhesion between the fluorine-containing resin layer (a) and the elastomer layer (b) cannot be exhibited sufficiently.

Fuel permeation coefficient of the fluorine-containing ethylenic polymer of the present invention is preferably not more than 20 (g·mm)/($m^2$·day), more preferably not more than 15 (g·mm)/($m^2$·day), further preferably not more than 10 (g·mm)/($m^2$·day), especially preferably not more than 5 (g·mm)/($m^2$·day). A lower limit of the fuel permeation coefficient is not limited particularly, and the lower, the more preferable. When the fuel permeation coefficient exceeds 20 (g·mm)/($m^2$·day), since fuel impermeability is low, it is necessary to make a thickness of a molded article thick in order to inhibit an amount of fuel permeation, which is not preferable from economical point of view. When the fuel permeation coefficient is as low as possible, ability of preventing fuel permeation is improved, and on the contrary, when the fuel permeation coefficient is large, since fuel easily permeates, the molded article is not suitable as a molded article such as a fuel tube.

The fuel permeation coefficient is measured by a cup method in a test method of water-vapor permeability of a water-proof packaging material. Here, the cup method is a test method of water-vapor permeability provided in JIS Z 0208 for measuring an amount of water vapor permeating through a unit area of a film material during a given period of time. In the present invention, the fuel permeation coefficient is measured by this cup method. Specifically, into a 20 ml SUS stainless steel vessel (area of opening: 1.26 x $10^{-3}$ $m^2$) is poured 18 ml of a dummy fuel CE10 (toluene/isooctane/ethanol=45/45/10 in volume percent), and a sheet-like test piece is set at the opening portion of the vessel, and the opening is tightly closed to make a test sample. The test sample is put in a thermostatic chamber (60°C) and a weight of the test sample is measured. When a weight reduction per unit time becomes constant, fuel permeability is determined by the following equation.

$$\text{Fuel permeation coefficient } ((\text{g}\cdot\text{mm})/(\text{m}^2\cdot\text{day})) = \frac{[\text{Weight reduction (g)}] \times [\text{Thickness of sheet (mm)}]}{[\text{Area of opening } 1.26\times10^{-3}\ (\text{m}^2)] \times [\text{Measuring interval (day)}]}$$

A process for preparing the fluorine-containing resin is not limited particularly, and examples of the process are those described in JP2005-298702A and WO 2005/100420.

The fluorine-containing resin layer (a) contains at least one polyfunctional compound (c) in order to improve adhesion. The polyfunctional compound (c) is a compound having, in its one molecule, two or more functional groups having the same or different structure selected from amino and hydroxyl. Compounds having such functional groups not only have high affinity for the elastomer layer (b) but also are expected to further improve adhesion by reaction with the above-mentioned functional group of the fluorine-containing resin layer (a)

Examples of the polyfunctional compound (c) are amine compounds such as hexamethylenediamine carbamate, N,N'-dicinnamylidene-1,6-hexamethylenediamine, 4,4'-bis(aminocyclohexyl)methane carbamate, 4,4'-diaminodiphenyl ether (hereinafter also referred to as DPE), 2,2-bis[4-(4-aminophenoxy)phenyl]propane (hereinafter also referred to as BAPP), p-phenylenediamine, m-phenylenediamine, 2,5-dimethyl-1,4-phenylenediamine, N,N'-dimethyl-1,4-phenylenediamine, 4,4'-methylenedianiline, dianilinoethane, 4,4'-methylene-bis(3-nitroaniline), 4,4'-methylene-bis(2-chloroaniline, diaminopyridine, melamine and 4-aminophenol, and hydroxy-containing compounds such as 2,2-bis(4-hydroxyphenyl)propane (hereinafter also referred to as bisphenol A), 2,2-bis(4-hydroxyphenyl)perfluoropropane (hereinafter also referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter also referred to as bisphenol B), 4,4-bis(4-hydroxyphenyl)valeric

acid, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A and 3,3',5,5'-tetrabromobisphenol A. Of these, N,N'-dicinnamylidene-1,6-hexamethylenediamine, DPE, BAPP and bisphenol AF are preferred from the viewpoint of good adhesion between the fluorine-containing resin layer (a) and the elastomer layer (b).

These polyfunctional compounds (c) may be used alone or may be used in optional combination with the polyfunctional compound (c) having a different structure.

The amount of polyfunctional compound (c) is preferably 0.1 to 10.0 parts by mass, more preferably 0.2 to 8.0 parts by mass, further preferably 0.3 to 7.0 parts by mass based on 100 parts by mass of the fluorine-containing resin. When the amount of polyfunctional compound (c) is less than 0.1 part by mass, there is a tendency that adhesion between the fluorine-containing resin layer (a) and the elastomer layer (b) cannot be exhibited sufficiently, and when the amount of polyfunctional compound (c) exceeds 10.0 parts by mass, there is a tendency that dispersibility is lowered and mechanical properties of the fluorine-containing resin layer (a) are lowered.

Examples of a method of adding the polyfunctional compound (c) to the fluorine-containing resin layer (a) are a method of adding during melt-kneading of the fluorine-containing resin at a temperature of not less than the melting point of the fluorine-containing resin by means of a banbury mixer, a pressure kneader or an extruder and a method of adding the polyfunctional compound (c) to an emulsion of the fluorine-containing resin and carrying out co-coagulation.

In addition to the polyfunctional compound (c), to the fluorine-containing resin layer (a) can be added other polymer such as polyethylene, polypropylene, polyamide, polyester or polyurethane an inorganic filler such as calcium carbonate, talc, sellaite, clay, titanium oxide, carbon black or barium sulfate, pigment, flame retardant, lubricant, photostabilizer, stabilizer for weather resistance, antistatic agent, ultraviolet absorber, antioxidant, mold-releasing agent, foaming agent, perfume, oil and softening agent, to an extent not to impair the effect of the present invention.

Examples of the elastomer composition for the elastomer layer (b) are an acrylonitrile-butadiene rubber or a hydrogenated rubber thereof, a blended rubber of acrylonitrile-butadiene rubber and polyvinyl chloride, a fluorine-containing rubber, an epichlorohydrin rubber, an ethylene/propylene rubber, a chlorosulfonated polyethylene rubber, an acrylic rubber, a silicon rubber, a butyl rubber, a styrene-butadiene rubber, an ethylene-vinyl acetate copolymer, a $\alpha,\beta$-unsaturated nitrile-conjugated diene copolymer rubber or a hydride thereof, and the like. Of these, an acrylonitrile-butadiene rubber, a blended rubber of acrylonitrile-butadiene rubber and polyvinyl chloride, a fluorine-containing rubber and an epichlorohydrin rubber are preferred from the viewpoint of heat resistance, oil resistance, weather resistance and extrusion moldability.

Also, from the viewpoint of improvement in adhesion strength between the fluorine-containing resin layer (a) and the elastomer layer (b), it is preferable to blend at least one compound selected from the group consisting of onium salts, amine compounds and epoxy resins to the above-mentioned elastomer. These onium salts, amine compounds and epoxy resins may be used alone or may be used in an optional combination thereof.

Onium salt is not limited particularly, and there are, for example, quaternary ammonium salts, quaternary phosphonium salts, oxonium salts, sulfonium salts, cyclic amines and mono-functional amine compounds. Of these, quaternary ammonium salts and quaternary phosphonium salts are preferred.

Quaternary ammonium salts are not limited particularly, and there are, for example, 8-methyl-1,8-diazabicyclo[5,4,0]-7-undeceniumchloride, 8-methyl-1,8-diazabicyclo[5,4,0]-7-undeceniumiodide, 8-methyl-1,8-diazabicyclo[5,4,0]-7-undeceniumhydroxide, 8-methyl-1,8-diazabicyclo[5,4,0]-7-undeceniummethylsulfate, 8-ethyl-1,8-diazabicyclo[5,4,0]-7-undeceniumbromide, 8-propyl-1,8-diazabicyclo[5,4,0]-7-undeceniumbromide, 8-dodecyl-1,8-diazabicyclo[5,4,0]-7-undeceniumchloride, 8-dodecyl-1,8-diazabicyclo[5,4,0]-7-undeceniumhydroxide, 8-eicosyl-1,8-diazabicyclo[5,4,0]-7-undeceniumchloride, 8-tetracosyl-1,8-diazabicyclo[5,4,0]-7-undeceniumchloride, 8-benzyl-1,8-diazabicyclo[5,4,0]-7-undeceniumchloride (hereinafter also referred to as DBU-B), 8-benzyl-1,8-diazabicyclo[5,4,0]-7-undeceniumhydroxide, 8-phenetyl-1,8-diazabicyclo[5,4,0]-7-undeceniumchloride, 8-(3-phenylpropyl)-1,8-diazabicyclo[5,4,0]-7-undeceniumchloride, a compound represented by the formula (7):

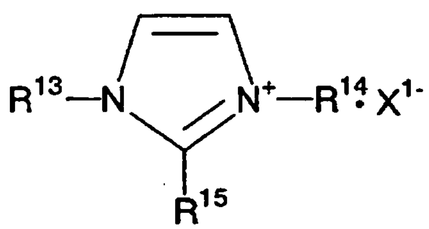
(7)

wherein $R^{13}$, $R^{14}$ and $R^{15}$ may be the same or different and each is a hydrogen atom or a monovalent organic group having 1 to 30 carbon atoms; $X^{1-}$ is a monovalent anion,

a compound represented by the formula (8):

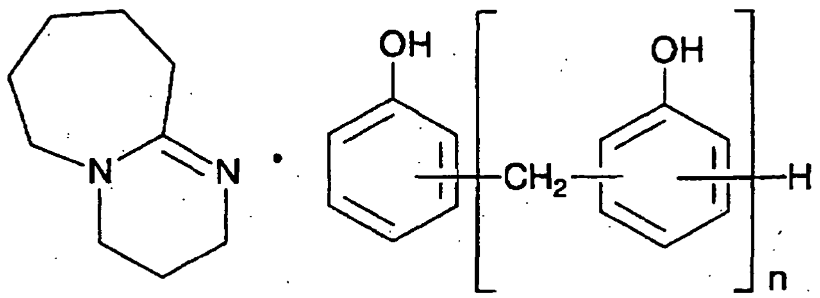

(8)

wherein n is 0 or an integer of 1 to 50,
a compound represented by the formula (9):

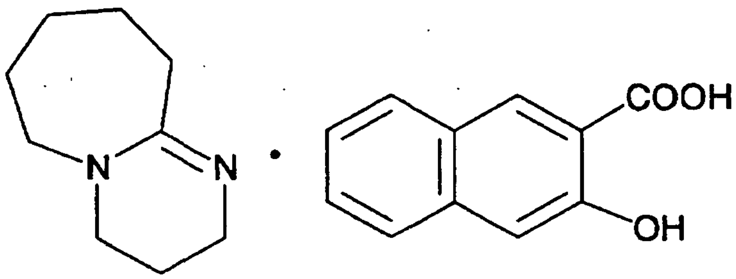

(9)

and the like.

In the formula (7), $R^{13}$, $R^{14}$ and $R^{15}$ may be the same or different and each is a hydrogen atom or a monovalent organic group having 1 to 30 carbon atoms. The monovalent organic group having 1 to 30 carbon atoms is not limited particularly, and there are exemplified an aliphatic hydrocarbon group, an aryl group such as phenyl and a benzyl group. Specifically, there are, for example, an alkyl group having 1 to 30 carbon atoms such as $-CH_3$, $-C_2H_5$ or $-C_3H_7$; a halogen atom-containing alkyl group having 1 to 30 carbon atoms such as $-CX^4_3$, $-C_2X^4_5$, $-CH_2X^4$, $-CH_2CX^4_3$ or $-CH_2C_2X^4_5$ ($X^4$ is fluorine atom, chlorine atom, bromine atom or iodine atom); a phenyl group; a benzyl group; a phenyl group or a benzyl group, in which 1 to 5 hydrogen atoms are substituted by fluorine atoms such as $-C_6F_5$ or $-CH_2C_6F_5$; or a phenyl group or a benzyl group, in which 1 to 5 hydrogen atoms are substituted by $-CF_3$ such as $-C_6H_{5-n}(CF_3)_n$ or $-CH_2C_6H_{5-n}(CF_3)_n$, where n is an integer of 1 to 5. Also, nitrogen atom may be contained as shown by:

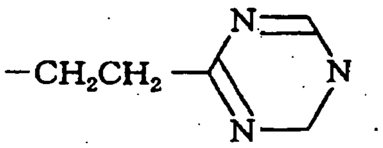

Of these, from the viewpoint of good adhesion strength between the fluorine-containing resin layer (a) and the elastomer layer (b), preferred are DBU-B, the compound of the formula (7), wherein each of $R^{13}$, $R^{14}$ and $R^{15}$ is an alkyl group having 1 to 20 carbon atoms or a benzyl group and $X^{1-}$ is a monovalent anion represented by halogen ion ($F^-$, $Cl^-$, $Br^-$, $I^-$), $OH^-$, $RO^-$, $RCOO^-$, $C_6H_5O^-$, $SO_4^{2-}$, $SO_3^{2-}$, $SO_2^-$, $RSO_3^{2-}$, $CO_3^{2-}$ or $NO_3^-$ (R is a monovalent organic group) and the compound of the formula (8), and $Cl^-$ is more preferred as $X^{1-}$ in the formula (7). Also, in the formula (8), from the viewpoint of dispersibility at kneading with the rubber, n is more preferably 0 or an integer of 1 to 10, further preferably an integer of 1 to 5.

Of these, especially a compound represented by:

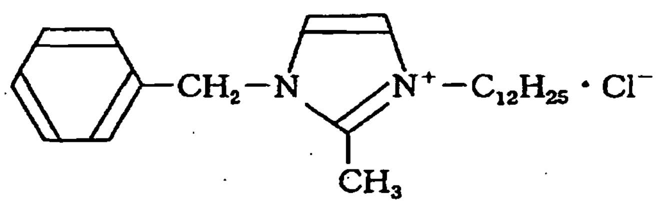

is preferred.

The quaternary phosphonium salt is not limited particularly, and examples thereof are tetrabutylphosphonium chloride, benzyltriphenylphosphonium chloride (hereinafter also referred to as BTPPC), benzyltrimethylphosphonium chloride, benzyltributylphosphonium chloride, tributylallylphosphonium chloride, tributyl-2-methoxypropylphosphonium chloride, benzylphenyl(dimethylamino)phosphonium chloride and the like. Among these, BTPPC is preferred from the viewpoint of good adhesion strength between the fluorine-containing resin layer (a) and the elastomer layer (b).

In addition, quaternary ammonium salts, solid solutions of quaternary phosphonium salts and bisphenol AF, and compounds disclosed in JP11-147891A can also be used.

The amount of onium salt is preferably 0.1 to 10.0 parts by mass, more preferably 0.2 to 8.0 parts by mass, further preferably 0.3 to 7.0 parts by mass based on 100 parts by mass of the elastomer. When the amount of onium salt is less than 0.1 part by mass, there is a tendency that adhesion between the fluorine-containing resin layer (a) and the elastomer layer (b) cannot be exhibited sufficiently, and when the amount of onium salt exceeds 10.0 parts by mass, there is a tendency that dispersibility in the elastomer composition is lowered and mechanical properties of the elastomer layer are lowered.

The amine compound is not limited particularly, and there can be used derivatives of aliphatic polyamine compounds such as hexamethylenediamine carbamate, N,N'-dicinnamylidene-1,6-hexamethylenediamine (hereinafter also referred to as V3) and 4,4'-bis(aminocyclohexyl)methane carbamate, and aromatic polyamine compounds such as 4,4'-diaminodiphenyl ether (hereinafter also referred to as DPE), 2,2-bis[4-(4-aminophenoxy)phenyl]propane (hereinafter also referred to as BAPP), p-phenylenediamine, m-phenylenediamine, 2,5-dimethyl-1,4-phenylenediamine, N,N'-dimethyl- 1,4-phenylenediamine, 4,4'-methylenedianiline, dianilinoethane, 4,4'-methylene-bis(3-nitroaniline), 4,4'-methylene-bis(2-chloroaniline), diaminopyridine and melamine. Of these, V3, DPE and BAPP are preferred from the viewpoint of good adhesion strength between the fluorine-containing resin layer (a) and the elastomer layer (b).

The amount of amine compound is preferably 0.1 to 10.0 parts by mass, more preferably 0.2 to 8.0 parts by mass, further preferably 0.3 to 7.0 parts by mass based on 100 parts by mass of the elastomer. When the amount of amine compound is less than 0.1 part by mass, there is a tendency that adhesion between the fluorine-containing resin layer (a) and the elastomer layer (b) cannot be exhibited sufficiently, and when the amount of amine compound exceeds 10.0 parts by mass, there is a tendency that dispersibility in the elastomer composition is lowered and mechanical properties of the elastomer layer are lowered.

Examples of the epoxy resin are bisphenol A type epoxy resins, bisphenol F type epoxy resins and polyfunctional epoxy resins. Examples of the bisphenol A type epoxy resin are compounds represented by the formula (10):

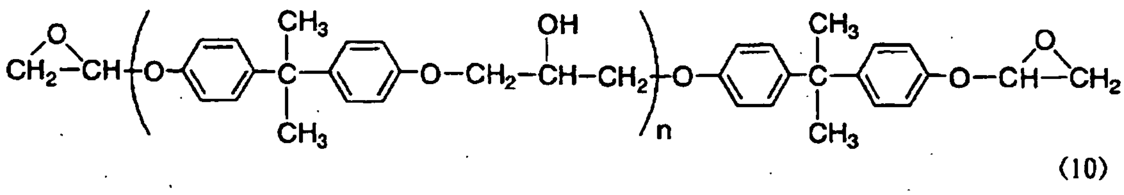

(10)

and the like. Here, in the formula (10), n is preferably 0.1 to 3, more preferably 0.1 to 0.5, further preferably 0.1 to 0.3. When n is less than 0.1, adhesion strength to other material tends to be lowered. On the other hand, when n exceeds 3, there is a tendency that viscosity becomes high and uniform dispersion in the rubber becomes difficult.

The amount of epoxy resin is preferably 0.1 to 20.0 parts by mass, more preferably 0.3 to 15 parts by mass, further preferably 0.5 to 10 parts by mass based on 100 parts by mass of the elastomer. When the amount of epoxy resin is less than 0.1 part by mass, there is a tendency that adhesion between the fluorine-containing resin layer (a) and the elastomer layer (b) cannot be exhibited sufficiently, and when the amount of epoxy resin exceeds 20 parts by mass, flexibility of the elastomer composition tends to be lowered.

For the elastomer layer of the present invention, either of un-vulcanized rubber and vulcanized rubber can be used.

All of vulcanizing agents can be used as a vulcanizing agent as far as they are usual vulcanizing agents to be used on elastomers. For example, there are sulfur type vulcanizing agent, peroxide vulcanizing agent, polythiol vulcanizing agent, quinoid type vulcanizing agent, resin type vulcanizing agent, metallic oxides, diamine type vulcanizing agent, polythiols, 2-mercaptoimidazoline, polyol vulcanizing agent and polyamine vulcanizing agent, and of these, peroxide vulcanizing agent, polyol vulcanizing agent and polyamine vulcanizing agent are preferred from the viewpoint of adhesion characteristics and mechanical properties of the obtained vulcanized rubber.

The amount of a vulcanizing agent to be blended to the elastomer composition is preferably 0.2 to 10 parts by mass, more preferably 0.5 to 8 parts by mass based on 100 parts by mass of the rubber. When the amount of vulcanizing agent is less than 0.2 part by mass, there is a tendency that vulcanization density is lowered and compression set

becomes large, and when the amount of vulcanizing agent exceeds 10 parts by mass, there is a tendency that vulcanization density becomes too large, and cracking is apt to occur at compression.

In addition, it is possible to blend, to the elastomer composition, various usual additives to be blended to elastomers as case demands, for example, a filler, a processing aid, a plasticizer, a colorant, a stabilizer, a vulcanization aid, an adhesion aid, an acid acceptor, a mold releasing agent, an electric conductivity imparting agent, a thermal conductivity imparting agent, an agent for imparting non-adhesiveness to surface, a flexibility imparting agent, a heat resistance improver, a flame retardant and the like. To the composition may be blended one or more usual vulcanizing agents or vulcanization accelerators which are different from those mentioned above.

In the present invention, the elastomer layer can be obtained by kneading the elastomer, onium salt, amine compound and/or epoxy resin, and other compounding agents such as a vulcanizing agent, a vulcanization aid, a co-vulcanizing agent, a vulcanization accelerator and a filler by using a rubber kneading equipment generally used. A roll, a kneader, a Banbury mixer, an internal mixer, a twin screw extruder or the like can be used as the rubber kneading equipment.

Particularly when using a polyol vulcanizing agent as a vulcanizing agent, in many cases, melting points of a vulcanizing agent and a vulcanization accelerator are relatively high, and in order to uniformly disperse them in the rubber, it is preferable to use a method of kneading a vulcanizing agent and a vulcanization accelerator while melting at high temperature of 120° to 200°C by using a closed kneading equipment such as a kneader and then kneading other compounding agents such as a filler at relatively low temperature lower than the temperature mentioned above. In addition, there is a method of uniformly dispersing by using a solid solution obtained by once melting a vulcanizing agent and a vulcanization accelerator and then causing lowering of a melting point.

Vulcanization conditions may be optionally determined depending on kind of a vulcanizing agent to be used, and usually baking is carried out at 150° to 300°C for 1 minute to 24 hours.

For vulcanization, usual methods such as steam vulcanization can be employed, and in addition, it is possible to carry out a vulcanization reaction under any conditions such as under normal pressure, under pressure, under reduced pressure or in the air.

The laminated article of the present invention can be prepared by laminating the sheet-like fluorine-containing resin layer (a) with the sheet-like elastomer layer (b) before the vulcanization, setting them in a mold, and then carrying out vulcanization for adhesion by subjecting them to heat-pressing. The laminated article can also be prepared by simultaneously extruding the two layers of the fluorine-containing resin layer (a) and the elastomer layer (b) with an extruder or by extruding an outside layer onto an inside layer using two extruders, thus extruding a laminated article comprising the inside layer and the outside layer, and then carrying out vulcanization for adhesion.

The structure of the laminated article is not limited particularly, and it is possible to employ, for example, a two-layer structure comprising the fluorine-containing resin layer (a) and the elastomer layer (b) and a three-layer structure comprising the fluorine-containing resin layer (a) being interposed between two kinds of the same or different elastomer layers (b). Also, it is possible to laminate a layer of other material on the laminated article of the present invention.

Also, in order to further improve adhesion between the fluorine-containing resin layer (a) and the elastomer layer (b), the fluorine-containing resin layer (a) may be subjected to surface treatment as case demands. This surface treatment is not limited particularly as far as it makes adhesion possible. For example, there are discharge treatments such as plasma discharge treatment and corona discharge treatment, and a wet method such as solution treatment with metallic sodium/naphthalene. In addition, primer treatment is also suitable as surface treatment. Primer treatment can be carried out according to usual method. Primer treatment can be made on a surface of the fluorine-containing resin which has not been subjected to surface treatment, and it is more effective to carry out primer treatment on a surface of the fluorine-containing resin which has been previously subjected to plasma discharge treatment, corona discharge treatment or solution treatment with metallic sodium/ naphthalene.

The laminated article of the present invention is excellent in adhesion between the resin layer and the elastomer layer, has chemical resistance, oil resistance, heat resistance and cold resistance, and is useful as a multi-layer fuel tube and a multi-layer fuel container. The laminated article is useful especially as a multi-layer fuel tube and a multi-layer fuel container for an engine and its peripheral devices, automatic transmission, fuel system and its peripheral devices, etc. of automobile. For example, there are exemplified fuel tubes such as a filler hose, evaporation hose and breather hose for automobile; and fuel containers such as fuel container for automobile, fuel container for motorcycle, fuel container for small-size generator and fuel container for lawn mower.

Examples of application of the above-mentioned laminated article are sealing materials such as gaskets and non-contact type and contact type packings (self-seal packing, piston ring, split ring packing, mechanical seal, oil seal, etc.) which are required to have heat resistance, oil resistance, fuel oil resistance, resistance to an anti-freezing fluid for cooling an engine and steam resistance and are used for engine body, main engine-driving system, valve gear system, lubricating and cooling system, fuel system, and suction/exhaust system; transmission of driving gear system; steering system of chassis; brake system; standard electrical parts, electrical parts for control and accessory electrical parts for automobiles.

Sealing materials used on an engine body of automobiles are not limited particularly, and examples thereof are, for instance, gaskets such as a cylinder head gasket, cylinder head cover gasket, oil pan packing and general gaskets, and sealing materials such as an O-ring, packing and timing belt cover gasket.

Sealing materials used for a main engine-drive system of automobile are not limited particularly, and examples thereof are, for instance, shaft seals such as crank shaft seal and cam shaft seal.

Sealing materials used for valve gear system of an automobile engine are not limited particularly, and examples thereof are, for instance, a valve stem oil seal of an engine valve.

Sealing materials used for a lubricating and cooling system of an automobile engine are not limited particularly, and examples thereof are, for instance, a seal gasket for engine oil cooler and the like.

Sealing materials used for a fuel system of an automobile engine are not limited particularly, and examples thereof are, for instance, an oil seal of a fuel pump, a filler seal and tank packing of a fuel tank, a connector O-ring of a fuel tube, an injector cushion ring, an injector seal ring and an injector O-ring of a fuel injector, a flange gasket of a carburetor and the like.

Sealing materials used for a suction/exhaust system of an automobile engine are not limited particularly, and examples thereof are, for instance, a suction manifold packing and exhaust manifold packing of a manifold, a throttle body packing, a turbine shaft seal of a turbo charger and the like.

Sealing materials used for a transmission system of automobile engine are not limited particularly, and examples thereof are, for instance, a bearing seal, oil seal, O-ring and packing for transmission and an O-ring and packing for automatic transmission.

Sealing materials used for a brake system of automobile engine are not limited particularly, and examples thereof are, for instance, an oil seal, O-ring, packing, piston cup (rubber cup) of a master cylinder, caliper seal, boots and the like.

Sealing materials used for accessory electrical parts of automobile engine are not limited particularly, and examples thereof are, for instance, an O-ring and packing of an air conditioner.

Applications other than automobile application are not limited particularly, and examples thereof are, for instance, packings, O-rings and other sealing materials requiring oil resistance, chemical resistance, heat resistance, steam resistance and weather resistance in transport means such as ships and air planes; similar packings, O-rings and sealing materials for chemical plants; similar packings, O-rings and sealing materials for food plant equipment and food processing equipment (including those for domestic use); similar packings, O-rings and sealing materials for equipment of atomic power plant; and similar packings, O-rings and sealing materials for general industrial parts.

The molded article of the present invention can be suitably used for the above-mentioned various applications, and is suitable especially as peripheral parts of fuel system. Also, the molded article of the present invention is useful especially as a sealing material, packing, roller, tube or hose.

EXAMPLE

The present invention is then explained by means of examples, but is not limited to them.

<Preparation of sheet-like test piece (fluorine-containing resin layer)>

Various fluorine-containing resins are set in a metallic mold and are held at 270° to 300°C for 15 to 30 minutes to make a dynamically crosslinkable composition in a molten state, and then a load of 3 MPa is applied for one minute for compression molding to make a sheet-like test piece having a specified thickness.

<Preparation of sheet-like test piece (elastomer layer)>

Various compounding agents such as a vulcanizing agent and a filler are added to a crude rubber in a 8-inch open roll to prepare a full compound. A sheet-like test piece having a specified thickness is made using this full compound in an open roll.

<Preparation of laminated article>

A 0.5 mm thick fluorine-containing resin sheet and a 1.5 mm thick rubber composition sheet are made by the above-mentioned methods. These sheet-like test pieces are superposed on each other and set in a metallic mold previously heated to 170°C. Then, a load of 3 MPa is applied at 170°C for 20 minutes with a heat press to make a fluorine-containing resin layer/elastomer layer laminated article.

<Test for evaluation of adhesion>

The obtained laminated articles are cut into 1.0 cm wide × 10 cm strips to make test pieces for adhesion test, and an adhesion test is carried out using these test pieces at 25°C at a drawing rate of 50 mm/min with autograph (AGS-J 5kN available from Shimadzu Corporation) in accordance with JIS-K-6256 (method of adhesion test of vulcanized rubber) to measure adhesive strength. Also, a peeling mode is observed, and evaluated by the following criteria.

(Evaluation of adhesion)

◎ : Peeling does not occur at an interface between the fluorine-containing resin layer and the elastomer layer, and the elastomer layer was broken.
○: Peeling occurs at an interface between the fluorine-containing resin layer and the elastomer layer, but adhesion is sufficient and it is difficult to peel both layers.
Δ: Peeling occurs relatively easily at an interface between the fluorine-containing resin layer and the elastomer layer.
×: No adhesion is exhibited between the fluorine-containing resin layer and the elastomer layer.

<Analysis of functional group with infrared absorption spectrum>

A sheet having a thickness of 0.15 to 0.30 mm is prepared by the above-mentioned method, and infrared absorption spectrum is analyzed with Perkin-Elmer FT-IR spectrometer 1760X (available from Perkin Elmer Co., Ltd.). A base line of the obtained infrared absorption spectrum is judged automatically with Perkin-Elmer Spectrum for windows Ver. 1.4C and absorbance at a specified peak is measured. A film thickness is measured with a micrometer.

<Measurement of composition of copolymer of fluorine-containing resin>

Composition of a copolymer of a fluorine-containing resin is determined by $^{19}$F-NMR and measurement by elemental analysis of fluorine.

<Fuel permeability of fluorine-containing resin>

A 0.5 mm thick sheet-like test piece is prepared by the above-mentioned method. Into a 20 ml SUS stainless steel vessel (area of opening: $1.26 \times 10^{-3}$ $m^2$) is poured 18 ml of a dummy fuel CE10 (toluene/isooctane/ethanol=45/45/10 in volume percent), and the sheet-like test piece is set at the opening portion of the vessel, and the opening is tightly closed to make a test sample. The test sample is put in a thermostatic chamber (60°C) and a weight of the test sample is measured. When a weight reduction per unit time becomes constant, fuel permeation coefficient is determined by the following equation.

$$\text{Fuel permeation coefficient } ((\text{g}\cdot\text{mm})/(\text{m}^2\cdot\text{day})) = \frac{[\text{Weight reduction (g)}] \times [\text{Thickness of sheet (mm)}]}{[\text{Area of opening } 1.26\times10^{-3}\ (\text{m}^2)] \times [\text{Measuring interval (day)}]}$$

<Measurement of tensile modulus of elasticity of fluorine-containing resin>

A 2 mm thick sheet-like test piece is prepared by the above-mentioned method, and a 3.18 mm wide dumbbell test piece having a bench mark distance of 1.0 mm is punched with ASTM V type dumbbell. A tension test is carried out using the obtained dumbbell test piece at 25°C at a drawing rate of 50 mm/min with autograph (AGS-J 5kN available from Shimadzu Corporation) in accordance with ASTM D638.

<Measurement of melting point of fluorine-containing resin>

A melting peak when heating up at a rate of 10°C/min is recorded with a SEIKO type differential scanning calorimeter (DSC), and a temperature corresponding to a maximal value is assumed to be a melting point.

<Measurement of melt flow rate (MFR) of fluorine-containing resin>

A mass (g) of a polymer flowing out in a unit time (10 minutes) through a 2 mm diameter × 8 mm long nozzle under a load of 5 kg is measured at each measuring temperature with a melt indexer (available from Toyo Seiki Seisaku-Sho, Ltd.).

<Preparation Example>

The following materials are used in Examples and Comparative Examples.

(Fluorine-containing resin layer)

Fluorine-containing resin (a-1): FEP having -COOH group. Component monomers: TFE/HFP/perfluoro(propyl vinyl ether)=91.9/7.7/0.4 (molar ratio). Melting point: 260°C. MFR at 372°C: 18 g/10 min. Number of -COOH groups: 480 (per one million carbon atoms). Tensile modulus of elasticity: 600 MPa. Fuel permeation coefficient: 0.3 (g·mm)/($m^2$·day).

Fluorine-containing resin (a-2): FEP having -OC(=O)$OCH_2CH_2CH_3$ group. Component monomers: TFE/HFP/perfluoro(propyl vinyl ether)=91.8/7.6/0.6 (molar ratio). Melting point: 261°C. MFR at 372°C: 20 g/10 min. Number of -OC(=O)$OCH_2CH_2CH_3$ groups: 410 (per one million carbon atoms). Tensile modulus of elasticity: 600 MPa. Fuel permeation coefficient: 0.3 (g·mm)/($m^2$·day).

Fluorine-containing resin (a-3): FEP having -COF group. Component monomers: TFE/HFP/perfluoro(propyl vinyl ether)=91.9/7.7/0.4 (molar ratio). Melting point: 260°C. MFR at 372°C: 22 g/10 min. Number of -COF groups: 450 (per one million carbon atoms). Tensile modulus of elasticity: 590 MPa. Fuel permeation coefficient: 0.3 (g·mm)/($m^2$·day).

Fluorine-containing resin (a-4): FEP having -CF=$CF_2$ group. Component monomers: TFE/HFP/perfluoro(propyl vinyl ether)=91.9/7.7/0.4 (molar ratio). Melting point: 260°C. MFR at 372°C: 22 g/10 min. Number of -CF=$CF_2$ groups: 380 (per one million carbon atoms). Tensile modulus of elasticity: 600 MPa. Fuel permeation coefficient: 0.3 (g·mm)/($m^2$·day).

Fluorine-containing resin (a-5): FEP having -$NH_2$ group. After melting 80 g of FEP (a-2) in a 80 ml LABOPLASTOMIL (available from Toyo Seiki Seisaku-Sho, Ltd.) heated to 280°C, 1 g of polyfunctional compound V3 (available from Daikin Industries, Ltd.) is added thereto and melt-kneading is carried out to obtain the fluorine-containing resin. Melting point: 261°C. MFR at 372°C: 32 g/10 min. According to infrared absorption spectrum, an absorption band is observed at 1,744 $cm^{-1}$ while it is not observed in FEP (a-2), and this suggests that FEP and at least a part of polyfunctional compound are bonded by amide bond. Tensile modulus of elasticity: 570 MPa. Fuel permeation coefficient: 0.4 (g·mm)/($m^2$·day).

Fluorine-containing resin (a-6): FEP having -$NH_2$ group. After melting 80 g of FEP (a-3) in a 80 ml LABOPLASTOMIL (available from Toyo Seiki Seisaku-Sho, Ltd.) heated to 280°C, 1 g of polyfunctional compound DPE (available from Wakayama Seika Kogyo Co., Ltd.) is added thereto and melt-kneading is carried out to obtain the fluorine-containing resin. Melting point: 260°C. MFR at 372°C: 28 g/10 min. According to infrared absorption spectrum, an absorption band is observed at 1,744 $cm^{-1}$ while it is not observed in FEP (a-3), and this suggests that FEP and at least a part of polyfunctional compound are bonded by amide bond. Tensile modulus of elasticity: 590 MPa. Fuel permeation coefficient: 0.4 (g·mm)/($m^2$·day).

Fluorine-containing resin (a-7): FEP having -$NH_2$ group. After melting 80 g of FEP (a-3) in a 80 ml LABOPLASTOMIL (available from Toyo Seiki Seisaku-Sho, Ltd.) heated to 280°C, 3 g of polyfunctional compound DPE (available from Wakayama Seika Kogyo Co., Ltd.) is added thereto and melt-kneading is carried out to obtain the fluorine-containing resin. Melting point: 260°C. MFR at 372°C: 31 g/10 min. According to infrared absorption spectrum, an absorption band is observed at 1,744 $cm^{-1}$ while it is not observed in FEP (a-3), and this suggests that FEP and at least a part of polyfunctional compound are bonded by amide bond. Tensile modulus of elasticity: 580 MPa. Fuel permeation coefficient: 0.4 (g·mm)/($m^2$·day).

Fluorine-containing resin (a-8): FEP having -$NH_2$ group. After melting 80 g of FEP (a-4) in a 80 ml LABOPLASTOMIL (available from Toyo Seiki Seisaku-Sho, Ltd.) heated to 280°C, 1 g of polyfunctional compound BAPP (available from Wakayama Seika Kogyo Co., Ltd.) is added thereto and melt-kneading is carried out to obtain the fluorine-containing resin. Melting point: 260°C. MFR at 372°C: 27 g/10 min. According to infrared absorption spectrum, an absorption band is observed at 1,744 $cm^{-1}$ while it is not observed in FEP (a-4), and this suggests that FEP and at least a part of polyfunctional compound are bonded by amide bond. Tensile modulus of elasticity: 590 MPa. Fuel permeation coefficient 0.4 (g·mm)/($m^2$·day).

Fluorine-containing resin (a-9): ETFE having -OC(=O)$OCH_2CH_2CH_3$ group. Component monomers: TFE/ethylene/2,3,3,4,4,5,5-heptafluoro-1-pentene=63.4/34.2/2.4 (molar ratio). Melting point: 225°C. MFR at 297°C: 30 g/10 min. Number of -OC(=O)$OCH_2CH_2CH_3$ groups: 510 (per one million carbon atoms). Tensile modulus of elasticity: 490 MPa.

Fuel permeation coefficient: 4.0 (g·mm)/($m^2$·day).

Fluorine-containing resin (a-10): CTFE-TFE copolymer having $-OC(=O)OCH(CH_3)_2$ group. Component monomers: CTFE/TFE/perfluoro(propyl vinyl ether)=44.5/53.4/2.1 (molar ratio). Melting point: 221°C. MFR at 297°C: 35 g/10 min. Number of $-OC(=O)OCH(CH_3)_2$ groups: 600 (per one million carbon atoms). Tensile modulus of elasticity: 520 MPa. Fuel permeation coefficient: 0.3 (g·mm)/($m^2$·day).

Fluorine-containing resin (a-11): FEP having $-CF_3$ group and $-CF_2H$ group. Component monomers: TFE/HFP/perfluoro(propyl vinyl ether)=91.9/7.7/0.4 (molar ratio). Melting point: 260°C. MFR at 372°C: 18 g/10 min. Number of -COOH groups, $-OC(=O)OCH_2CH_2CH_3$ groups, $-OC(=O)OCH(CH_3)_2$ groups, -COF groups, $-CF=CF_2$ groups and $-NH_2$ groups is less than 20 each (per one million carbon atoms). Tensile modulus of elasticity: 600 MPa. Fuel permeation coefficient: 0.3 (g·mm)/($m^2$·day).

Fluorine-containing resin (a-12): After melting 80 g of fluorine-containing resin (a-2) in a 80 ml LABOPLASTOMIL (available from Toyo Seiki Seisaku-Sho, Ltd.) heated to 280°C, 1.6 g of zinc oxide 1 grade as an inorganic filler (available from SAKAI CHEMICAL INDUSTRY CO., LTD.) and melt-kneading is carried out to obtain the fluorine-containing resin. Melting point: 260°C. MFR at 372°C: 27 g/10 min. Tensile modulus of elasticity: 600 MPa. Fuel permeation coefficient: 0.4 (g·mm)/($m^2$·day).

(Elastomer layer)

Elastomer (b-1): FKM full compound. To 100 parts by mass of fluorine-containing crude rubber comprising three components (G-558BP available from Daikin Industries, Ltd. and comprising VdF/TFE/HFP=58/20/22 in molar percent) are added 2.2 parts by mass of bisphenol AF (available from Daikin Industries, Ltd.), 0.56 part by mass of DBU-B (available from Wako Pure Chemical Industries, Ltd.), 13 parts by mass of carbon black (SEAST S available from Tokai Carbon Co., Ltd.), 3.0 parts by mass of magnesium oxide (KYOWAMAG 150 available from Kyowa Chemical Industries Co., Ltd.) and 6.0 parts by mass of calcium hydroxide (CALDIC 2000 available from Ohmi Chemical Industry Co., Ltd.), and the mixture is kneaded with 8-inch open roll.

Elastomer (b-2): NBR full compound. To 100 parts by mass of acrylonitrile-butadiene rubber (N530 available from JSR Co, Ltd.) are added 43 parts by mass of carbon black (N990 available from Cancarb Co., Ltd.), 7 parts by mass of zinc oxide (available from Histick Co., Ltd.), 21 parts by mass of wet silica (Nipsil VN3 available from Nippon Silica Kogyo Co., Ltd.), 1.4 parts by mass of stearic acid (LUNAC available from KAO CORPORATION), 3 parts by mass of antioxidant (A.O.224 available from KING INDUSTRIES CO., LTD.), 21 parts by mass of plasticizer (Thiokol TP95 available from Morton International), wax (carnauba wax available from Toa Kasei Co., Ltd.) and 3 parts by mass of peroxide (PERCUMYL D-40 available from NOF CORPORATION), and the mixture is kneaded with 8-inch open roll.

Elastomer (b-3): NBR full compound. To 100 parts by mass of acrylonitrile-butadiene rubber (N530 available from JSR Co, Ltd.) are added 43 parts by mass of carbon black (N990 available from Cancarb Co., Ltd.), 7 parts by mass of zinc oxide (available from Histick Co., Ltd.), 21 parts by mass of wet silica (Nipsil VN3 available from Nippon Silica Kogyo Co., Ltd.), 1.4 parts by mass of stearic acid (LUNAC available from KAO CORPORATION), 3 parts by mass of antioxidant (A.O.224 available from KING INDUSTRIES CO., LTD.), 21 parts by mass of plasticizer (Thiokol TP95 available from Morton International), wax (carnauba wax available from Toa Kasei Co., Ltd.), 3 parts by mass of peroxide (PERCUMYL D-40 available from NOF CORPORATION), 6 parts by mass of V3 (available from Daikin Industries, Ltd.) and 6 parts by mass of EPIKOTE 828 (available from Japan Epoxy Resins Co., Ltd.), and the mixture is kneaded with 8-inch open roll. The structural formula of EPIKOTE 828 is shown below (formula (10)).

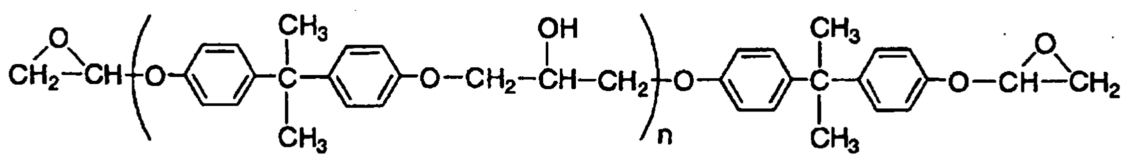

(10)

(in the formula, n is 0.1)

Elastomer (b-4): ECO full compound. To 100.0 parts by mass of epichlorohydrin rubber (EPICHLOMER CG available from DAISO CO, LTD.) are added 80 parts by mass of carbon black (N550 available from Cancarb Co., Ltd.), 5.0 parts by mass of plasticizer (ADK cizer RS-107 available from ADEKA CORPORATION), 2.0 parts by mass of lubricant (Splender R-300), 2.0 parts by mass of antioxidant (NOCRAC NBC available from OUCHI SHINKO CHEMICAL INDUSTRIAL CO., LTD.), 3.0 parts by mass of synthetic hydrotalcite (DHT-4A available from Kyowa Chemical Industries Co., Ltd.), 3.0 parts by mass of magnesium oxide (KYOWAMAG 150 available from Kyowa Chemical Industries Co., Ltd.), 1.5 parts by mass of DBU phenol resin salt (P-152) and 1.5 parts by mass of 6-methylquinoxaline-2,3-dithiocarbonate (DAISONET XL-21S available from DAISO CO, LTD.), and the mixture is kneaded with 8-inch open roll.

EXAMPLES 1 to 16, REFERENCE EXAMPLES 1 to 28 and COMPARATIVE EXAMPLES 1 to 4

Laminated articles were prepared by the above-mentioned method in combination of the fluorine-containing resin layers and elastomer layers shown in Table 1. Adhesive strength of these laminated articles was measured and evaluated by above-mentioned method. As shown in the table, it was seen that these laminated articles exhibit good adhesion at an interface between the fluorine-containing resin layer (a) which formed using the fluorine-containing resin having a carbonyl group, olefin group or amino group at an end of a trunk chain or in a side chain of the polymer and comprises at least one polyfunctional compound (c) having in its molecule two or more functional groups having the same or different structure selected from hydroxyl and amino, and the elastomer layer (b) formed using the elastomer composition, and are useful as a material to be used around a fuel.

INDUSTRIAL APPLICABILITY

The laminated article of the present invention can improve adhesion between the fluorine-containing resin layer (a) and the elastomer layer (b) when allowing the fluorine-containing resin layer to adhere to the elastomer layer.

TABLE 1

| Ex. No. | Fluorine-containing resin layer | Elastomer layer | Adhesive strength (N/cm) | Evaluation of adhesion |
|---|---|---|---|---|
| Ref. Ex. 1 | Fluorine-containing resin (a-1) | Elastomer (b-1) | 4 | Δ |
| Ref. Ex. 2 | Fluorine-containing resin (a-1) | Elastomer (b-2) | 5 | Δ |
| Ref. Ex. 3 | Fluorine-containing resin (a-1) | Elastomer (b-3) | 7 | Δ |
| Ref. Ex. 4 | Fluorine-containing resin (a-1) | Elastomer (b-4) | 9 | Δ |
| Ref. Ex. 5 | Fluorine-containing resin (a-2) | Elastomer (b-1) | 12 | ○ |
| Ref. Ex. 6 | Fluorine-containing resin (a-2) | Elastomer (b-2) | 15 | ○ |
| Ref. Ex. 7 | Fluorine-containing resin (a-2) | Elastomer (b-3) | 17 | ○ |
| Ref. Ex. 8. | Fluorine-containing resin (a-2) | Elastomer (b-4) | 10 | Δ |
| Ref. Ex. 9 | Fluorine-containing resin (a-3) | Elastomer (b-1) | 13 | ○ |
| Ref. Ex. 10 | Fluorine-containing resin (a-3) | Elastomer (b-2) | 14 | ○ |
| Ref. Ex. 11 | Fluorine-containing resin (a-3) | Elastomer (b-3) | 18 | ○ |
| Ref. Ex. 12 | Fluorine-containing resin (a-3) | Elastomer (b-4) | 12 | ○ |
| Ref. Ex. 13 | Fluorine-containing resin (a-4) | Elastomer (b-1) | 7 | Δ |
| Ref. Ex. 14 | Fluorine-containing resin (a-4) | Elastomer (b-2) | 6 | Δ |
| Ref. Ex. 15 | Fluorine-containing resin (a-4) | Elastomer (b-3) | 15 | ○ |
| Ref. Ex. 16 | Fluorine-containing resin (a-4) | Elastomer (b-4) | 10 | ○ |
| Ex. 1 | Fluorine-containing resin (a-5) | Elastomer (b-1) | 30 | ○ |
| Ex. 2 | Fluorine-containing resin (a-5) | Elastomer (b-2) | 28 | ○ |
| Ex. 3 | Fluorine-containing resin (a-5) | Elastomer (b-3) | 40 or more | ◎ |
| Ex. 4 | Fluorine-containing resin (a-5) | Elastomer (b-4) | 40 or more | ◎ |
| Ex. 5 | Fluorine-containing resin (a-6) | Elastomer (b-1) | 40 or more | ◎ |
| Ex. 6 | Fluorine-containing resin (a-6) | Elastomer (b-2) | 40 or more | ◎ |
| Ex. 7 | Fluorine-containing resin (a-6) | Elastomer (b-3) | 40 or more | ◎ |
| Ex. 8 | Fluorine-containing resin (a-6) | Elastomer (b-4) | 40 or more | ◎ |
| Ex. 9 | Fluorine-containing resin (a-7) | Elastomer (b-1) | 40 or more | ◎ |
| Ex. 10 | Fluorine-containing resin (a-7) | Elastomer (b-2) | 40 or more | ◎ |
| Ex. 11 | Fluorine-containing resin (a-7) | Elastomer (b-3) | 40 or more | ◎ |

(continued)

| Ex. No. | Fluorine-containing resin layer | Elastomer layer | Adhesive strength (N/cm) | Evaluation of adhesion |
|---|---|---|---|---|
| Ex. 12 | Fluorine-containing resin (a-7) | Elastomer (b-4) | 40 or more | ◎ |
| Ex. 13 | Fluorine-containing resin (a-8) | Elastomer (b-1) | 40 or more | ◎ |
| Ex. 14 | Fluorine-containing resin (a-8) | Elastomer (b-2) | 40 or more | ◎ |
| Ex. 15 | Fluorine-containing resin (a-8) | Elastomer (b-3) | 40 or more | ◎ |
| Ex. 16 | Fluorine-containing resin (a-8) | Elastomer (b-4) | 40 or more | ◎ |
| Ref. Ex. 17 | Fluorine-containing resin (a-9) | Elastomer (b-1) | 15 | ○ |
| Ref. Ex. 18 | Fluorine-containing resin (a-9) | Elastomer (b-2) | 23 | ○ |
| Ref. Ex. 19 | Fluorine-containing resin (a-9) | Elastomer (b-3) | 30 | ○ |
| Ref. Ex. 20 | Fluorine-containing resin (a-9) | Elastomer (b-4) | 12 | ○ |
| Ref. Ex. 21 | Fluorine-containing resin (a-10) | Elastomer (b-1) | 10 | ○ |
| Ref. Ex. 22 | Fluorine-containing resin (a-10) | Elastomer (b-2) | 8 | Δ |
| Ref. Ex. 23 | Fluorine-containing resin (a-10) | Elastomer (b-3) | 18 | ○ |
| Ref. Ex. 24 | Fluorine-containing resin (a-10) | Elastomer (b-4) | 14 | ○ |
| Ref. Ex. 25 | Fluorine-containing resin (a-12) | Elastomer (b-1) | 13 | ○ |
| Ref. Ex. 26 | Fluorine-containing resin (a-12) | Elastomer (b-2) | 15 | ○ |
| Ref. Ex. 27 | Fluorine-containing resin (a-12) | Elastomer (b-3) | 16 | ○ |
| Ref. Ex. 28 | Fluorine-containing resin (a-12) | Elastomer (b-4) | 10 | Δ |
| Com. Ex. 1 | Fluorine-containing resin (a-11) | Elastomer (b-1) | 2 or less | × |
| Com. Ex. 2 | Fluorine-containing resin (a-11) | Elastomer (b-2) | 2 or less | × |
| Com. Ex. 3 | Fluorine-containing resin (a-11) | Elastomer (b-3) | 2 or less | × |
| Com. Ex. 4 | Fluorine-containing resin (a-11) | Elastomer (b-4) | 2 or less | × |

## Claims

**1.** A laminated article comprising:

(i) a fluorine-containing resin layer (a) which

- is formed using a fluorine-containing resin having a carbonyl group, an olefin group or an amino group at an end of a polymer trunk chain or an end of a polymer side chain, and
- comprises at least one polyfunctional compound (c) having in its molecule two or more functional groups having the same or different structure selected from hydroxyl and amino.

(ii) an elastomer layer (b) formed using an elastomer composition.

**2.** The laminated article of Claim 1, wherein the fluorine-containing resin of layer (a) is a copolymer comprising tetrafluoroethylene and hexafluoropropylene, ethylene or chlorotrifluoroethylene.

**3.** The laminated article of Claim 1 or 2, wherein the elastomer composition of layer (b) comprises an acrylonitrile-butadiene rubber or a hydrogenated rubber thereof, a blended rubber of acrylonitrile-butadiene rubber and polyvinyl chloride, a fluorine-containing rubber, an epichlorohydrin rubber, an ethylene/propylene rubber, a chlorosulfonated polyethylene rubber or an acrylic rubber.

**4.** The laminated article of any of Claims 1-3, wherein the elastomer composition of layer (b) comprises at least one

compound selected from an onium salt, an amine compound and an epoxy resin.

5. A molded article formed using the laminated article of any of Claims 1-4.

6. The molded article of claim 5, which is a fuel tube.

**Patentansprüche**

1. Laminierter Gegenstand, umfassend:

(i) eine fluorhaltige Harzschicht (a), die

- unter Verwendung eines fluorhaltigen Harzes gebildet ist, das eine Carbonylgruppe, eine Olefingruppe oder eine Aminogruppe an einem Ende einer Polymerhauptkette oder an einem Ende einer Polymerseitenkette aufweist, und
- mindestens eine polyfunktionelle Verbindung (c) umfasst, die in ihrem Molekül zwei oder mehrere funktionelle Gruppen aufweist, die die gleiche oder unterschiedliche Struktur haben und aus Hydroxyl und Amino ausgewählt sind,

(ii) eine Elastomerschicht (b), die unter Verwendung einer Elastomerzusammensetzung gebildet ist.

2. Laminierter Gegenstand nach Anspruch 1, in dem das fluorhaltige Harz der Schicht (a) ein Copolymer ist, das Tetrafluorethylen und Hexafluorpropylen, Ethylen oder Chlortrifluorethylen umfasst.

3. Laminierter Gegenstand nach Anspruch 1 oder 2, in dem die Elastomer-Zusammensetzung der Schicht (b) einen Acrylnitril-Butadien-Kautschuk oder einen hydrierten Kautschuk davon, eine Kautschukmischung von Acrylnitril-Butadien-Kautschuk und Polyvinylchlorid, einen fluorhaltigen Kautschuk, einen Epichlorhydrin-Kautschuk, einen Ethylen-Propylen-Kautschuk, einen chlorsulfonierten Polyethylenkautschuk oder einen Acrylkautschuk umfasst.

4. Laminierter Gegenstand nach einem der Ansprüche 1 bis 3, in dem die Elastomer-Zusammensetzung der Schicht (b) mindestens eine Verbindung umfasst, die aus einem Oniumsalz, einer Aminverbindung und einem Epoxidharz ausgewählt ist.

5. Geformter Gegenstand, der unter Verwendung des laminierten Gegenstands nach einem der Ansprüche 1 bis 4 geformt ist.

6. Geformter Gegenstand nach Anspruch 5, der eine Kraftstoffleitung ist.

**Revendications**

1. Article stratifié comprenant :

(i) une couche de résine contenant du fluor (a), qui

- est formée en utilisant une résine contenant du fluor ayant un groupe carbonyle, un groupe oléfine ou un groupe amino au niveau d'une extrémité d'une chaîne principale de polymère ou d'une extrémité d'une chaîne latérale de polymère, et
- comprend au moins un composé polyfonctionnel (c) ayant dans sa molécule deux groupes fonctionnels ou plus ayant une structure identique ou différente choisi parmi un groupe hydroxyle et un groupe amino,

(ii) une couche d'élastomère (b) formée en utilisant une composition d'élastomère.

2. Article stratifié de la revendication 1, dans lequel la résine contenant du fluor de la couche (a) est un copolymère comprenant du tétrafluoroéthylène et de l'hexafluoropropylène, de l'éthylène ou du chlorotrifluoroéthylène.

3. Article stratifié de la revendication 1 ou 2, dans lequel la composition d'élastomère de la couche (b) comprend un

caoutchouc d'acrylonitrile-butadiène ou un caoutchouc hydrogéné de celui-ci, un caoutchouc mélangé de caoutchouc d'acrylonitrile-butadiène et de polychlorure de vinyle, un caoutchouc contenant du fluor, un caoutchouc d'épichlorohydrine, un caoutchouc d'éthylène/propylène, un caoutchouc de polyéthylène chlorosulfoné ou un caoutchouc acrylique.

**4.** Article stratifié de l'une des revendications 1 à 3, dans lequel la composition d'élastomère de la couche (b) comprend au moins un composé choisi parmi un sel d'onium, un composé amine et une résine époxy.

**5.** Article moulé formé en utilisant l'article stratifié de l'une des revendications 1 à 4.

**6.** Article moulé de la revendication 5, qui est un tube de combustible.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7018035 A
- JP 7025952 A
- JP 7025954 A
- JP 7173230 A
- JP 7173446 A
- JP 7173447 A
- JP 7228848 A
- US 4916020 A
- JP 2987391 B
- JP 373127 B
- WO 9945044 A
- JP 2005298702 A
- WO 2005100420 A
- JP 11147891 A